# FASCICULE DE BREVET EUROPEEN

(11) **EP 1 403 136 B1**
(45) Date de publication et mention de la délivrance du brevet: **05.04.2006**
(21) Numéro de dépôt: 03292270.0
(22) Date de dépôt: 15.09.2003
(51) Int. Cl.: B60Q 1/076, H02P 8/08

(54) **Moteur pas à pas**
Schrittmotor
Step motor

(30) Priorité: 27.09.2002 FR 0212024
(43) Date de publication de la demande: 31.03.2004
(73) Titulaire: VALEO VISION, 93012 Bobigny Cédex (FR)
(72) Inventeur: Cara, Hervé, 93012 Bobigny Cedex (FR); Monchy, Etienne, 93012 Bobigny Cedex (FR)
(74) Mandataire: Renous Chan, Véronique

(56) Documents cités:
- EP-A- 1 234 716
- US-A- 3 628 120
- US-B1- 6 282 380
- PATENT ABSTRACTS OF JAPAN vol. 008, no. 096 (M-294), 4 mai 1984 (1984-05-04) -& JP 59 011933 A (KOITO SEISAKUSHO KK), 21 janvier 1984 (1984-01-21)

## Description

La présente invention a pour objet un moteur pas à pas particulier, essentiellement destiné à être utilisé dans les dispositifs projecteurs de véhicule automobile.

L'invention a essentiellement pour but de proposer une amélioration dans les phases d'initialisation de moteur pas à pas afin de limiter certains inconvénients qui peuvent apparaître lors de ces phases d'initialisation. Ces inconvénients sont notamment une durée relativement importante dans la détermination d'une position de référence, ou un déplacement, qui s'avère gênant pour un utilisateur, d'un élément, par exemple un dispositif projecteur, associé au moteur pas à pas.

Le domaine de l'invention est, d'une façon générale, celui des projecteurs de véhicule automobile. Dans ce domaine, on connaît différents types de projecteurs, parmi lesquels on trouve essentiellement :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur ;
- des projecteurs perfectionnés, dits bimodes, qui cumulent les fonctions de feux de croisement et de feu de route en incorporant un cache amovible ;
- des feux anti-brouillard.

Certains projecteurs sont disposés dans des boîtiers qui comportent une platine extérieure susceptible de pivoter, entraînant ainsi un déplacement du faisceau lumineux associé à ces projecteurs. Le plus souvent, la platine comporte trois points de fixation, qui sont autant de points de contact pour faire pivoter cette platine. Ils permettent ainsi aussi bien un réglage latéral pour ramener un faisceau lumineux dans son axe de visée théorique, qu'un réglage horizontal pour régler la hauteur d'un faisceau lumineux ; un des points de contact est le plus souvent utilisé comme point de pivotement pour permettre les mouvements latéraux ou horizontaux. Ce sont les tiges de moteurs, ou actionneurs, disposés à proximité des points de contact, ou des tiges associées à des systèmes purement mécaniques, qui servent d'intermédiaire mécanique pour contrôler le basculement des platines. Dans d'autres exemples de réalisation de dispositifs projecteurs orientables, on peut faire pivoter directement les réflecteurs des dispositifs réflecteurs, sans platine intermédiaire, et toujours par l'intermédiaire de tiges de moteurs ou de systèmes mécaniques.

Les systèmes mécaniques auxquels il vient d'être fait référence sont destinés à effectuer des réglages manuels de l'orientation d'un faisceau lumineux. Ces réglages manuels sont nécessairement effectués lorsque le véhicule automobile est à l'arrêt. Cependant, notamment depuis l'utilisation de projecteurs au Xénon, plus puissants que les projecteurs halogènes, il est devenu obligatoire de disposer de systèmes automatiques de correction de portée d'éclairage ; l'utilisation d'actionneurs, associés à des calculateurs, est ainsi devenue indispensable pour compenser les changements d'assiette d'un véhicule tout au long de son parcours.

Les actionneurs utilisés dans ce type d'applications sont des moteurs de type pas à pas. En effet, les moteurs dits à courant continu, qui sont traditionnellement utilisés dans les dispositifs projecteurs avec des sources lumineuses de type lampe halogène, ne sont pas assez résistants pour supporter le nombre de cycles imposés par les systèmes de correction automatique. Dans les moteurs pas à pas, tel que celui décrit dans le document EP-A-1234716, on trouve notamment une unité de contrôle qui transmet à un bloc moteur des commandes de mouvement pas à pas, de telle sorte qu'une tige moteur ne puisse évoluer dans un mouvement de translation, éventuellement accompagné d'un mouvement de rotation, qu'entre des positions parfaitement définies, chacune des positions correspondant à un nombre de pas effectués. Dans des exemples particuliers de réalisation de l'état de la technique, chaque pas de la tige moteur correspond à une rotation de 15 degrés, l'un par rapport à l'autre, des aimants disposés dans le bloc moteur, cette rotation se traduisant par un mouvement de translation de la tige moteur de l'ordre de 33 microns. Dans certains exemples, on utilise des moteurs qui peuvent comporter 300 pas, la tige pouvant ainsi évoluer sur une dizaine de millimètres.

Par ailleurs, si les moteurs pas à pas sont essentiellement utilisés dans l'état de la technique avec des dispositifs projecteurs de type feux de croisement, il est évident que l'objet de l'invention peut être adapté à tout autre dispositif faisant intervenir des moteurs pas à pas, et notamment tout dispositif projecteur autre que des feux de croisement avec une source lumineuse de type lampe à Xénon.

Dans les moteurs pas à pas, à l'inverse des moteurs dits à courants continus, il n'est pas nécessaire, lors du fonctionnement du dispositif projecteur auquel on a associé le moteur pas à pas, d'utiliser des capteurs de recopie pour déterminer une position de la tige de sortie ; en effet, un dénombrement du nombre de pas commandés étant suffisant pour déterminer avec précision cette position. Notons que par position de la tige moteur, on désignera dans l'ensemble du document un état d'avancement de la tige moteur selon un axe correspondant à l'axe de sortie de la tige moteur, c'est à dire à l'axe de translation de cette tige.

Un problème se pose cependant lors de la mise sous tension du dispositif projecteur auquel on a associé un moteur pas à pas. En effet, il faut pouvoir déterminer rapidement et sans ambiguïté la position initiale, c'est à dire sa position à la mise sous tension, de la tige moteur afin de contrôler par la suite son état d'avancement.

Une première solution pourrait consister en la mémorisation de la dernière positon de la tige moteur avant qu'on ne coupe le moteur ; mais une telle opération est délicate car on ne peut pas être certain que les dernières commandes de pas transmises par l'unité de contrôle ont effectivement pu être prises en compte dans l'avancement de la tige moteur avant la coupure de l'alimentation de ce dernier.

Une deuxième solution pourrait consister dans l'utilisation d'un système de recopie associé à la tige moteur de l'actionneur pas à pas. Mais un tel système est trop onéreux du fait de l'ajout obligatoire d'au moins trois fils conducteurs pour pouvoir alimenter et relire en permanence le capteur utilisé dans le système de recopie. Par ailleurs, comme on l'a déjà précisé, l'endurance des systèmes de recopie exigée par les moteurs pas à pas est un critère difficile à atteindre.

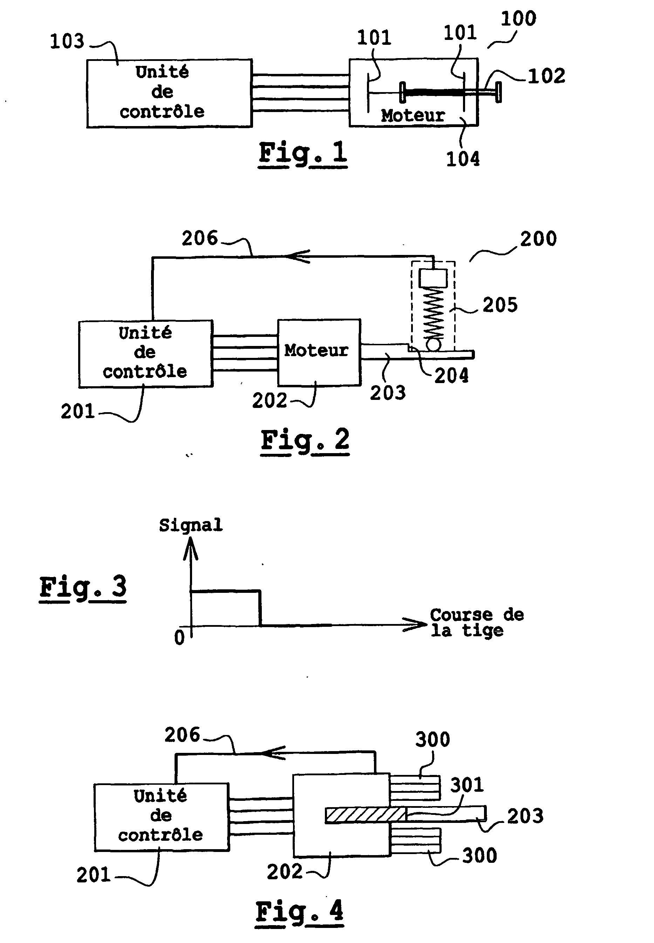

La solution la plus souvent retenue dans l'état de la technique est schématiquement illustrée à la figure 1. Cette solution consiste en un moteur pas à pas 100 à sortie linéaire, sans système de recopie, dans lequel à chaque mise sous tension du dispositif projecteur auquel il est associé, il est nécessaire d'initialiser le moteur par une mise en butée 101 d'une tige moteur 102 afin qu'une unité de contrôle 103 du moteur pas à pas 100 puisse connaître avec précision la position de la tige moteur 102. La mise en butée s'effectue au niveau d'un plan physique fixe d'un bloc moteur 104 qui donne naissance au mouvement de translation de la tige moteur 102. La mise en butée correspond soit à une rentrée, soit à une sortie complète de la tige moteur 102. C'est à l'instant précis où la tige moteur 102 est dans une position de butée que l'unité de contrôle 103 prend connaissance de la position de la tige moteur 102, et dispose ainsi d'un référencement indispensable pour le contrôle ultérieur de la position de la tige moteur 102.

Mais cette solution pose deux problèmes principaux. Tout d'abord, le temps de la mise en service effectif du dispositif projecteur est long, environ deux secondes, la tige moteur 102 devant être en moyenne déplacée de la moitié de sa longueur pour atteindre sa position de butée, puis devant adopter une position nominale de fonctionnement qui est assurément différente de sa position de butée. Ensuite, le fait de devoir atteindre une position de butée a pour effet d'orienter, qui plus est pendant une durée non négligeable, le faisceau lumineux issu du dispositif projecteur dans une position limite soit vers le haut, soit vers le bas. Dans l'état de la technique, afin de ne pas éblouir d'autres automobilistes, on choisit d'orienter le faisceau lumineux vers le bas, ce qui a tout de même pour effet de réduire considérablement la portée des projecteurs pendant cette durée d'initialisation. Le problème existe aussi lors de l'initialisation des moteurs pendant le roulage

L'objet de l'invention répond aux problèmes qui viennent d'être exposés. D'une façon générale, on propose dans l'invention un moteur pas à pas sans système de recopie qui n'impose pas à une tige moteur d'atteindre une position de butée dans un bloc moteur pour pouvoir établir un référencement de la position de cette tige. Dans l'invention, on réduit les déplacements de la tige moteur du moteur pas à pas pendant la phase d'initialisation.

A cet effet, dans l'invention, on propose un moteur pas à pas faisant intervenir un capteur de position qui permet, à chaque nouvelle mise sous tension du moteur pas à pas, que ce soit au démarrage du véhicule ou pendant une phase de roulage, de déterminer une position de la tige par rapport à un point de repère. L'unité de contrôle du moteur pas à pas commande alors le déplacement de la tige moteur dans un sens qui permet de faire passer une marque particulière, disposée sur la tige moteur à au moins un endroit prédéterminé et connu de l'unité de contrôle, au niveau d'un capteur de référencement, éventuellement confondu avec le capteur de position. Le moment où la marque particulière passe devant le capteur de référencement est retenu par l'unité de contrôle comme référence relative pour déterminer ultérieurement la position de la tige moteur.

Selon différents modes de réalisation, la marque particulière consiste en une discontinuité de la tige moteur, cette discontinuité pouvant être de différente nature.

L'invention concerne un moteur pas à pas selon la revendication 1 qui peut en outre présenter une ou plusieurs des caractéristiques suivantes :
- la position de référencement correspond à une position de la tige moteur dans laquelle une discontinuité de la tige se situe face à un capteur disposé à proximité de la tige moteur.
- la détermination de la position relative initiale de la tige moteur par rapport au point de repère fixe est réalisée au moyen du capteur disposé à proximité de la tige moteur.
- le capteur est disposé au niveau du point de repère fixe par rapport au bloc moteur.
- la tige moteur comprend une pluralité de discontinuité, chaque discontinuité correspondant à une position de référencement distincte.
- les discontinuités sur la tige moteur sont réparties uniformément sur la longueur de la tige moteur.
- la tige moteur comporte une discontinuité unique.
- la discontinuité unique est disposée au milieu de la tige moteur.
- chaque discontinuité de la tige moteur peut marquer un changement au niveau d'une section de la tige moteur, et/ou un changement de matière et/ou un changement de revêtement conducteur ou optique de la tige.
- le moteur comporte des moyens supplémentaires pour resynchroniser l'unité de contrôle lors de passages ultérieurs de la tige moteur dans une position de référencement.
- le capteur disposé à proximité de la tige moteur est de type à effet hall.
- le capteur disposé à proximité de la tige moteur est de type magnéto-résistif.
- le capteur disposé à proximité de la tige moteur est de type électro-mécanique, optique, ou tout autre type de moyen/capteur susceptible de détecter une discontinuité sur la tige moteur.

Un autre objet de l'invention est un véhicule automobile équipé d'un dispositif projecteur comportant un moteur pas à pas présentant l'une au moins des caractéristiques qui viennent d'être mentionnées.

L'invention et ses différentes applications seront mieux comprises à la lecture de la description qui suit et à l'examen des figures qui l'accompagnent. Celles-ci ne sont présentées qu'à titre indicatif et nullement limitatif de l'invention.
- à la figure 1, déjà décrite, une représentation schématique d'un moteur pas à pas de l'état de la technique ;
- à la figure 2, une représentation schématique d'un moteur pas à pas selon l'invention.
- à la figure 3, une allure approximative du signal de référencement obtenu avec le moteur pas à pas de la figure 2 ;
- à la figure 4, un exemple particulier de réalisation du moteur pas à pas selon l'invention.

Sur les différentes figures, les éléments qui sont communs à plusieurs figures auront conservé les mêmes références.

La figure 2 montre un moteur pas à pas 200 selon l'invention. Il comporte, de façon classique, une unité de contrôle 201 incorporant notamment un calculateur, un bloc moteur 202, comportant notamment un rotor et un stator ; le bloc moteur 202 permet de mettre en mouvement une tige moteur 203, notamment dans un mouvement de translation selon un axe dit axe de sortie du moteur pas à pas. Selon l'invention, la tige moteur 203 comporte une discontinuité 204 qui, dans l'exemple illustré, correspond à un changement de la section de la tige moteur 203, cette discontinuité étant disposée sensiblement au centre de la tige moteur 203. On a disposé par ailleurs un capteur 205 à proximité de la tige moteur 203. Ce capteur est connecté à l'unité de contrôle 201 au moyen d'une liaison 206.

Lors de la mise sous tension du dispositif projecteur auquel on a associé le moteur pas à pas, ou, d'une façon plus générale, lors de la mise sous tension du moteur pas à pas, l'unité de contrôle 201 ignore la position de la tige moteur 203. Selon l'invention, dès la mise sous tension, le capteur 205, qui intervient alors en tant que capteur de position, transmet une information à l'unité de contrôle 201 via la liaison 206. Cette information permet de préciser la position de la tige moteur par rapport à un point de repère fixe par rapport au bloc moteur 202, correspondant par exemple à la projection de la position du capteur de position sur l'axe de sortie du moteur pas à pas. Dans le cas illustré, le capteur 205 détecte qu'à son niveau, la tige moteur 203 présente une section fine. L'information qui est transmise à l'unité de contrôle 201 est donc une information de position, relative à une détection d'un paramètre physique de la tige moteur 203. Dans le cas présent, cette information peut être codée sur un unique bit, la section de la tige ne pouvant présenter que deux types de section: une fine ou une épaisse. Dans d'autres exemples de réalisation de l'invention, où la tige moteur 203 présente plus d'une discontinuité, l'information de position est codée sur un nombre de bits approprié. L'information de position ne donne à l'unité de contrôle 201 qu'une position approximative de la tige moteur 203 par rapport à une position de référence.

Le calculateur 201 exploite cette information pour déterminer un sens de mouvement à communiquer au bloc moteur 202 pour que la tige moteur bouge dans ce sens, qui dépend donc directement de l'information de position reçue. Le but de ce déplacement de la tige moteur 203, ordonné par le calculateur 201, est d'amener la tige moteur 203 dans une position de référencement. Un capteur, dit capteur de référencement, produit un signal de référencement qui est transmis à l'unité de contrôle 201. Cette dernière est capable de reconnaître quand la tige moteur 203 atteint cette position de référencement en détectant la discontinuité 204 ménagée dans la tige moteur 203, cette discontinuité se traduisant le plus souvent par le passage par un minimum ou un maximum relatif ou absolu du signal de référencement, ou par une transition brutale de ce dernier. En d'autres termes, une position de référencement est une position de la tige moteur 203 dans laquelle une discontinuité de cette tige arrive, en considérant toujours l'axe de sortie du moteur pas à pas 200, au niveau du capteur de référencement.

La figure 3 est une courbe, avec en ordonnée une valeur du signal de référencement et en abscisse l'état d'avancement de la tige moteur selon son axe de sortie, qui donne une allure approximative du signal de référencement transmis à l'unité de contrôle 201, une transition brutale pouvant être observée lorsque la discontinuité 204 arrive au niveau du capteur 205. L'invention utilise ici la valeur de tout ou rien de l'état du capteur pour déterminer le sens de référencement du moteur. A l'état "1", le capteur entraîne un mouvement de la tige du moteur. A l'état "0", il indique au calculateur principal qu'il faut sortir la tige pour atteindre la position de référence. C'est avec le type de sortie illustrée par la figure 3 qu'on peut appliquer le plus avantageusement la stratégie de déplacement de la tige selon l'invention, liée à l'état tout ou rien du capteur.

Dans l'exemple illustré, le capteur de position et le capteur de référencement sont un même et unique capteur 205, mais ces capteurs pourraient être distincts dans d'autres exemples de réalisation du moteur pas à pas selon l'invention.

Une fois une position de référencement détectée, l'unité de contrôle 201, dans laquelle on a préalablement mémorisé les différents paramètres permettant de reconnaître une ou plusieurs positions de référencement, peut alors commencer à compter le nombre de pas effectués par le moteur pas à pas 200 et ainsi connaître avec précision la position exacte de la tige moteur 203.

La figure 4 montre un exemple particulier de réalisation d'un moteur pas à pas 200 selon l'invention, dans lequel le capteur 204 prend la forme d'un couple de bobines 300, chacune de ces bobines 300 étant dans cet exemple composé de trois bobines différentielles. Dans cet exemple, une discontinuité 301 de la tige moteur 203 consiste en un changement du matériau composant la tige moteur 203. Dans d'autres exemples non représentés, une discontinuité peut consister en un changement d'un revêtement conducteur disposé sur la surface de la tige moteur 203, ou encore en un changement d'un revêtement optique disposé sur la surface de la tige moteur 203, des capteurs appropriés devant alors être utilisés.

Les exemples des figures 2 et 4 ne font intervenir qu'une unique discontinuité sur la tige moteur 203. II est bien évident que la tige moteur 203 peut comporter plusieurs discontinuités, chaque discontinuité, lorsqu'elle arrive au niveau d'un capteur de référencement, devant pouvoir être interprétée par l'unité de contrôle 201 comme une position de référencement. L'unité de contrôle 201 aura été préalablement programmée pour pouvoir discerner sans ambiguïté chacune des positions de référencement afin de se servir de celle-ci comme une position relative de référence pour contrôler la position de la tige moteur 203. Le capteur de position doit également être adapté pour fournir un signal de positionnement indiquant à l'unité de contrôle entre quelles discontinuités la mesure donnant le signal de positionnement a été effectuée. Le nombre maximal de discontinuités envisagé est égal au nombre de pas qu'il est possible d'effectuer avec la tige moteur 203.

Dans le cas où plusieurs discontinuités sont utilisées, elles ne sont pas nécessairement de même nature. Par ailleurs, elles peuvent être réparties uniformément tout au long de la tige moteur 203, ou réparties de façon irrégulière, par exemple en étant concentrées sur les extrémités de la tige moteur. Dans d'autres exemples de réalisation qui ne font pas partie de l'invention, on peut également utiliser un capteur de référencement destiné à détecter une discontinuité dans l'évolution de la position d'un rotor du bloc moteur.

Grâce à l'invention, la vision du conducteur, au moment de la recherche de la position de référencement du moteur pas à pas, n'est plus un rabattement total vers le bas du dispositif projecteur pendant une durée de l'ordre de deux secondes, mais un léger mouvement soit vers le haut, soit vers le bas, pendant une durée moins importante.

Un autre avantage de l'invention est que le capteur de référencement peut également servir pour resynchroniser l'unité de contrôle du moteur pas à pas à chaque passage, ou à certains passages ultérieurs, d'une discontinuité de la tige moteur au niveau de ce capteur, ce qui permet de corriger quasiment instantanément toute perte de pas ou toute dérive de la tige moteur.

## Revendications

1. Moteur pas à pas (200) comprenant une unité de contrôle (201), un bloc moteur (202) et une tige moteur (203) susceptible d'évoluer selon un mouvement de translation, **caractérisé en ce qu'**il comprend .
- des moyens de détection de position de ladite tige moteur (203) se présentant sous la forme d'au moins une discontinuité (204; 301) de ladite tige moteur (203), ladite discontinuité étant détectable par un capteur (205) lorsque la tige moteur (203) passe par une position de référencement ;
- des moyens pour déterminer, à la mise sous tension du moteur pas à pas (200), une position relative initiale de la tige moteur (203) par rapport à un point de repère fixe par rapport au bloc moteur (202);
- des moyens pour déplacer la tige moteur (203) vers ladite position de référencement dans un sens dépendant de la position relative initiale de la tige moteur (203) par rapport au point de repère, jusqu'à atteindre la position de référencement ; et
- des moyens pour initialiser l'unité de contrôle (201) du moteur pas à pas (200) au moment où la tige moteur (203) atteint la position de référencement.

2. Moteur pas à pas (200) selon la revendication précédente **caractérisé en ce que** la position de référencement correspond à une position de la tige moteur (203) dans laquelle ladite discontinuité (204 ;301) de la tige moteur (203) se situe face audit capteur (205) qui est disposé à proximité de la tige moteur (203).

3. Moteur pas à pas (200) selon la revendication précédente **caractérisé en ce que** la détermination de la position relative initiale de la tige moteur (203) par rapport au point de repère fixe est réalisée au moyen du capteur (205) disposé à proximité de la tige moteur (203).

4. Moteur pas à pas (200) selon l'une au moins des revendications 2 ou 3 **caractérisé en ce que** le capteur (205) est disposé au niveau du point de repère fixe par rapport au bloc moteur (202).

5. Moteur pas à pas (200) selon l'une au moins des revendications 2 à 4 **caractérisé en ce que** la tige moteur (203) comprend une pluralité de discontinuités (204 ;301), chaque discontinuité (204 ;301) correspondant à une position de référencement distincte.

6. Moteur pas à pas (200) selon la revendication précédente **caractérisé en ce que** les discontinuités (204 ;301) sur la tige moteur sont réparties uniformément sur la longueur de la tige moteur (203).

7. Moteur pas à pas (200) selon l'une au moins des revendications 2 à 4 **caractérisé en ce que** la tige moteur (203) comporte une discontinuité unique.

8. Moteur pas à pas (200) selon la revendication précédente **caractérisé en ce que** la discontinuité (204 ;301) unique est disposée au milieu de la tige moteur (203).

9. Moteur pas à pas (200) selon l'une au moins des revendications précédentes **caractérisé en ce que** chaque discontinuité (204 ;301) de la tige moteur (203) peut marquer un changement au niveau d'une section de la tige moteur (203), et/ou un changement de matière et/ou un changement de revêtement conducteur ou optique de la tige moteur (203).

10. Moteur pas à pas (200) selon l'une au moins des revendications précédentes **caractérisé en ce qu'**il comporte des moyens supplémentaires pour resynchroniser l'unité de contrôle (201) lors de passages ultérieurs de la tige moteur (203) dans une position de référencement.

11. Moteur pas à pas (200) selon l'une au moins des revendications 2 à 10 **caractérisé en ce que** le capteur (205) disposé à proximité de la tige moteur (203) est de type à effet hall.

12. Moteur pas à pas (200) selon l'une au moins des revendications 2 à 10 **caractérisé en ce que** le capteur (205) disposé à proximité de la tige moteur (203) est de type magnéto-résistif.

13. Véhicule automobile équipé d'un dispositif projecteur comportant un moteur pas à pas (200) selon l'une au moins des revendications 1 à 12.

## Patentansprüche

1. Schrittmotor (200) mit einer Steuereinheit (201), einem Motorblock (202) und einer Antriebsstange (203), die sich mit einer Translationsbewegung zu bewegen vermag,
**dadurch gekennzeichnet, dass** er umfasst
- Mittel zum Erkennen der Position der Antriebsstange (203), die die Form wenigstens einer Diskontinuität (204; 301) der Antriebsstange (203) aufweisen, wobei die Diskontinuität durch einen Sensor (205) erfasst wird, wenn die Antriebsstange (203) eine Referenzposition passiert;
- Mittel zum Bestimmen einer relativen Ausgangsstellung der Antriebsstange (203) bei Inbetriebnahme des Schrittmotors (200) bezüglich eines in Bezug auf den Motorblock (202) festen Bezugspunktes;
- Mittel zum Verlagern der Antriebsstange (203) zu der Referenzposition in einer Richtung, die von der relativen Ausgangsstellung der Antriebsstange (203) bezüglich des Bezugspunktes abhängt, bis zum Erreichen der Referenzposition; und
- Mittel zum Initialisieren der Steuereinheit (201) des Schrittmotors (200) in dem Augenblick, in dem die Antriebsstange (203) die Referenzposition erreicht.

2. Schrittmotor (200) nach dem vorhergehenden Anspruch,
**dadurch gekennzeichnet, dass** die Referenzposition einer Position der Antriebsstange (203) entspricht, in der sich die Diskontinuität (204; 301) der Antriebsstange (203) gegenüber dem Sensor (205) befindet, der in der Nähe der Antriebsstange (203) angeordnet ist.

3. Schrittmotor (200) nach dem vorhergehenden Anspruch,
**dadurch gekennzeichnet, dass** die Bestimmung der relativen Ausgangsstellung der Antriebsstange (203) bezüglich des Bezugspunktes mit Hilfe des in der Nähe der Antriebsstange (203) angeordneten Sensors (205) erfolgt.

4. Schrittmotor (200) nach wenigstens einem der Ansprüche 2 oder 3,
**dadurch gekennzeichnet, dass** der Sensor (205) in Höhe des in Bezug auf den Motorblock (202) festen Bezugspunktes angeordnet ist.

5. Schrittmotor (200) nach wenigstens einem der Ansprüche 2 bis 4,
**dadurch gekennzeichnet, dass** die Antriebsstange (203) eine Vielzahl von Diskontinuitäten (204; 301) aufweist, wobei jede Diskontinuität (204; 301) einer anderen Referenzposition entspricht.

6. Schrittmotor (200) nach dem vorhergehenden Anspruch,
**dadurch gekennzeichnet, dass** die Diskontinuitäten (204; 301) auf der Antriebsstange gleichmäßig über die Länge der Antriebsstange (203) verteilt sind.

7. Schrittmotor (200) nach wenigstens einem der Ansprüche 2 bis 4,
**dadurch gekennzeichnet, dass** die Antriebsstange (203) eine einzige Diskontinuität aufweist.

8. Schrittmotor (200) nach dem vorhergehenden Anspruch,
**dadurch gekennzeichnet, dass** die einzige Diskontinuität (204; 301) in der Mitte der Antriebsstange (203) angeordnet ist.

9. Schrittmotor (200) nach wenigstens einem der vorhergehenden Ansprüche,
**dadurch gekennzeichnet, dass** jede Diskontinuität (204; 301) der Antriebsstange (203) eine Veränderung hinsichtlich eines Querschnitts der Antriebsstange (203) und/oder eine Veränderung des Materials und/oder eine Veränderung des leitenden oder optischen Überzugs der Antriebsstange (203) kennzeichnen kann.

10. Schrittmotor (200) nach wenigstens einem der vorhergehenden Ansprüche,
**dadurch gekennzeichnet, dass** er zusätzliche Mittel zum Resynchronisieren der Steuereinheit (201) beim weiteren Passieren einer Referenzposition durch die Antriebsstange (203) umfasst.

11. Schrittmotor (200) nach wenigstens einem der Ansprüche 2 bis 10,
**dadurch gekennzeichnet, dass** der in der Nähe der Antriebsstange (203) angeordnete Sensor (205) ein Halleffekt-Sensor ist.

12. Schrittmotor (200) nach wenigstens einem der Ansprüche 2 bis 10,
**dadurch gekennzeichnet, dass** der in der Nähe der Antriebsstange (203) angeordnete Sensor (205) ein magnetoresistiver Sensor (205) ist.

13. Kraftfahrzeug, ausgestattet mit einer Scheinwerfervorrichtung mit einem Schrittmotor (200) nach wenigstens einem der Ansprüche 1 bis 12.

## Claims

1. Stepping motor (200) comprising a control unit (201), a drive unit (202) and a drive rod (203) able to follow a translation movement, **characterised in that** it comprises
- means of detecting the position of the said drive rod (203) in the form of at least one discontinuity (204; 301) on the said drive rod (203), the said discontinuity being detectable by a sensor (205) when the drive rod (203) passes through a referencing position;
- means for determining, when the stepping motor (200) is energised, an initial relative position of the drive rod (203) with respect to a reference point fixed with respect to the drive unit (202);
- means for moving the drive rod (203) towards the said referencing position in a direction depending on the initial relative position of the drive rod (203) with respect to the reference point, until it reaches the referencing position; and
- means for initialising the control unit (201) of the stepping motor (200) at the moment when the drive rod (203) reaches the referencing position.

2. Stepping motor (200) according to the preceding claim, **characterised in that** the referencing position corresponds to a position of the drive rod (203) in which the said discontinuity (204; 301) on the drive rod (203) is situated facing the said sensor (205) which is disposed close to the drive rod (203).

3. Stepping motor (200) according to the preceding claim, **characterised in that** the determination of the initial relative position of the drive rod (203) with respect to the fixed reference point is achieved by means of the sensor (205) disposed close to the drive rod (203).

4. Stepping motor (200) according to at least one of claims 2 or 3, **characterised in that** the sensor (205) is disposed at the reference point fixed with respect to the drive unit (202).

5. Stepping motor (200) according to at least one of claims 2 to 4, **characterised in that** the drive rod (203) comprises a plurality of discontinuities (204; 301), each discontinuity (204; 301) corresponding to a distinct referencing position.

6. Stepping motor (200) according to the preceding claim, **characterised in that** the discontinuities (204; 301) on the drive rod are distributed uniformly over the length of the drive rod (203).

7. Stepping motor (200) according to at least one of claims 2 to 4, **characterised in that** the drive rod (203) comprises a single discontinuity.

8. Stepping motor (200) according to the preceding claim, **characterised in that** the single discontinuity (204; 301) is disposed in the middle of the drive rod (203) .

9. Stepping motor (200) according to at least one of the preceding claims, **characterised in that** each discontinuity (204; 301) of the drive rod (203) can mark a change in the cross-section of the drive rod (203) and/or a change of material and/or a change in conductive or optical cladding of the drive rod (203).

10. Stepping motor (200) according to at least one of the preceding claims, **characterised in that** it comprises supplementary means for resynchronising the control unit (201) when the drive rod (203) subsequently passes into a referencing position.

11. Stepping motor (200) according to at least one of claims 2 to 10, **characterised in that** the sensor (205) disposed in the vicinity of the drive rod (203) is of the Hall effect type.

12. Stepping motor (200) according to at least one of claims 2 to 10, **characterised in that** the sensor (205) disposed in the vicinity of the drive rod (203) is of the magneto-resistive effect type.

13. Motor vehicle equipped with a headlight device comprising a stepping motor (200) according to at least one of claims 1 to 12.
